# EUROPEAN PATENT APPLICATION

(11) **EP 4 768 708 A1**
(43) Date of publication of application: **01.07.2026**
(21) Application number: 25223779.7
(22) Date of filing: 16.12.2025
(51) Int. Cl.: F02N 11/08, B60K 35/10, B60R 25/04, B60W 30/18, H01H 19/00, H01H 19/02, E02F 9/20, H01H 25/06, F02N 11/10

(54) **SYSTEM FOR STARTING AND STOPPING THE PRIME MOVER OF A WORKING VEHICLE**

(30) Priority: 24.12.2024 GB 202419074
(71) Applicant: J.C. Bamford Excavators Limited, Uttoxeter Staffordshire ST14 5JP (GB)
(72) Inventor: MOORE, Richard, Uttoxeter, ST14 5JP (GB); KENT, Mark, Uttoxeter, ST14 5JP (GB); MILLAR, Robert, Uttoxeter, ST14 5JP (GB); WATSON, Benjamin, Uttoxeter, ST14 5JP (GB)
(74) Representative: Hambley, Christopher John

(57) **Abstract**

A start-stop system 100 for a working vehicle is provided. The start-stop system comprises a body 102; a push button 104 configured for linear movement relative to the body between a first button position and a second button position; and a rotatable sleeve 108 positioned radially outboard of the push button and configured to rotate between a first sleeve position and a second sleeve position. The start-stop system is configured to transition to an enabled state when the rotatable sleeve is moved from the first sleeve position to the second sleeve position. The start-stop system is configured to activate a prime mover of the vehicle when the start-stop system is in the enabled state and the push button is moved from the first button position to the second button position. The rotatable sleeve is biased to automatically return from the second sleeve position to the first sleeve position.

## Description

### FIELD

The present disclosure relates to a start-stop system for a working vehicle. Aspects of the invention relate to a start-stop system for a working vehicle and to a working vehicle.

### BACKGROUND

There are various types of start-stop systems which are used to control activation of a prime mover of a vehicle (e.g., engine or motor). A common type of start-stop system is an ignition switch which is operated by a key. Such an ignition switch typically has an "off" position in which most operations of the vehicle are disabled; one or more "on" positions in which some operations of the vehicle are activated; and a "start" position in which a starter component is actuated to activate the prime mover (e.g., cranking a starter motor to start an engine).

Another type of start-stop system is a push button which is pressed to activate the prime mover. Such a push button may be used with an immobiliser fob to inhibit activation of the prime mover by unauthorised persons.

It is an aim of the present invention to address one or more of the disadvantages associated with the prior art.

### SUMMARY

The present teachings provide a start-stop system and a working vehicle according to the appended claims.

An aspect of the teachings provides a start-stop system for a working vehicle. The start-stop system may comprise a body for mounting in a vehicle. The start-stop system may comprise a push button configured for linear movement relative to the body along a longitudinal axis between a first button position and a second button position. The start-stop system may comprise a rotatable sleeve positioned radially outboard of the push button with respect to the longitudinal axis and configured to rotate around the push button between a first sleeve position and a second sleeve position.

The start-stop system may be configured to transition to an enabled state when the rotatable sleeve is moved from the first sleeve position to the second sleeve position.

The start-stop system may be configured to activate a prime mover of the vehicle when the start-stop system is in the enabled state and the push button is moved from the first button position to the second button position.

Optionally, the rotatable sleeve is biased to automatically return from the second sleeve position to the first sleeve position. Having the rotatable sleeve biased to return to the first sleeve position (e.g., instead of latching in the second sleeve position) may facilitate a greater range of control options.

One example of a control option that may be facilitated by such a biasing of the rotatable sleeve is automatic disabling of the start-stop system (e.g., corresponding to deactivation of an ignition of the vehicle) without confusing the operator. It will be understood that it may be desirable for the start-stop system to be disabled in particular conditions (e.g., so that the prime mover cannot be activated). For example, it may be desirable for the start-stop system to be disabled if an immobiliser becomes activated and/or if the prime mover is not activated within a predetermined amount of time and/or if the prime mover stalls or has a fault. However, an operator may forget to manually disable the start-stop system in such conditions. It may be possible to automatically disable the start-stop system in such conditions without input from the operator. However, if the rotatable sleeve was latched in the second sleeve position (e.g., mechanically or electrically) the operator may be confused regarding why the start-stop system has been disabled. Furthermore, this may require manual return of the rotatable sleeve to the first sleeve position and then again to the second sleeve position in order to re-enable the start-stop system, which may be unintuitive to the operator. Therefore, by having the rotatable sleeve biased to return to the first sleeve position, this may facilitate automatic disabling of the start-stop system without confusing the operator.

An example of a different control option that may be facilitated by the biasing of the rotatable sleeve is different outputs depending on length of time that the rotatable sleeve is held in the second sleeve position. For example, twisting the rotatable sleeve to the second sleeve position and then releasing may cause the start-stop system to transition to the enabled state, whereas holding the rotatable sleeve in the second sleeve position for a longer time period (e.g., a few seconds) may provide a different control output (e.g., transitioning to the enabled state as well as activating an accessory device, such as a radio). Similarly, moving the rotatable sleeve to the second sleeve position more than once within a given time frame may result in a different control output. Such functionality could not be provided with a latching-type rotatable sleeve without a range of different latch positions, which would be cumbersome to design and difficult for a user to operate reliably.

Having the rotatable sleeve biased to return to the first sleeve position (e.g., instead of latching in the second sleeve position) may also remove a requirement for positional indicia on the rotatable sleeve and/or body for indicating the rotational position of the rotatable sleeve, because the rotatable sleeve is always in the first sleeve position (e.g., a central position) when not actuated by the operator.

It will be understood that the enabled state of the start-stop system is a state in which action can be taken by the operator to activate the prime mover. For example, the enabled state may correspond to an ignition "on" state of the vehicle.

Conversely, the start-stop system may have a disabled state in which action cannot be taken by the operator to activate the prime mover without first transitioning to the enabled state. For example, the disabled state may correspond to an ignition "off" state of the vehicle.

It will be understood that the start-stop system may be used with various different types of vehicles having different types of prime mover. For example, where the start-stop system is used in a vehicle with an internal combustion engine prime mover, activation of the prime mover may comprise cranking a starter motor to start the internal combustion engine. Where the start-stop system is used in a vehicle with an electric motor prime mover, activation of the prime mover may comprise closing a switch and/or setting a software flag which allows electric energy to be supplied from an electric energy storage device (e.g., battery) to the electric motor.

Optionally, the start-stop system is configured in the enabled state to output an enable signal to a sub-system of the vehicle.

In this way, the vehicle may activate one or more sub-systems required for activation of the prime mover in advance of activating the prime mover. For example, an ignition of the vehicle may be activated.

In addition, one or more vehicle accessory systems may be activated in response to the enable signal (e.g., lights, HVAC systems, sensors, gauges, etc.).

Optionally, the start-stop system is configured to output a prime mover activation signal in order to activate the prime mover.

Optionally, the rotatable sleeve is configured to rotate in a first rotational direction around the push button from the first sleeve position to the second sleeve position.

Optionally, the rotatable sleeve is configured to rotate in a second rotational direction around the push button from the first sleeve position to a third sleeve position. Such a third position facilitates additional control options (e.g., disabling the start-stop system).

Optionally, the start-stop system is configured to transition to a disabled state when the rotatable sleeve is moved from the first sleeve position to the third sleeve position. In other words, twisting the rotatable sleeve in the first rotational direction may put the start-stop system into a condition in which the operator can activate the prime mover of the vehicle, whereas twisting the rotatable sleeve in the second rotational direction may put the start-stop system into a condition in which operator cannot activate the prime mover. This provides a simple and intuitive means of controlling when the prime mover of the vehicle can be activated.

Optionally, the start-stop system is configured in the disabled state to output a disable signal to a sub-system of the vehicle.

Optionally, the rotatable sleeve is biased to automatically return from the third sleeve position to the first sleeve position.

This may facilitate a greater range of control options, in a similar manner to the biasing from the second sleeve position to the first sleeve position described above.

Optionally, the start-stop system is configured to deactivate the prime mover of the vehicle when the rotatable sleeve is moved from the first sleeve position to the third sleeve position.

This provides a simple means of deactivating the prime mover.

It will be understood that the means by which the vehicle deactivates the prime mover will vary depending on the type of prime mover. For example, where the prime mover is an internal combustion engine, deactivation of the prime mover may comprise closing a fuel supply to stop the internal combustion engine. Where the prime mover is an electric motor, deactivation of the prime mover may comprise opening a switch and/or setting a software flag which inhibits electric energy from being supplied from an electric energy storage device (e.g., battery) to the electric motor.

Optionally, the start-stop system is configured to output a prime mover deactivation signal to deactivate the prime mover.

In some embodiments, the start-stop system is configured to simultaneously deactivate the prime mover (e.g., by outputting the prime mover deactivation signal) and to transition to the disabled state when the rotatable sleeve is moved from the first sleeve position to the third sleeve position.

In other embodiments, when the prime mover is activated and the rotatable sleeve is moved from the first sleeve position to the third sleeve position, the start-stop system may be configured to only deactivate the prime mover (i.e., the start-stop system may remain in the enabled state). In such embodiments, moving the rotatable sleeve from the first sleeve position to the third sleeve position for a second time may set the start-stop system to the disabled state.

Optionally, the start-stop system is configured to only transition to the enabled state when the rotatable sleeve is held in the second sleeve position for a more than a predetermined amount of time. Optionally, the predetermined amount of time comprises at least 0.5 seconds, optionally at least 1 second, optionally at least 1.5 seconds, optionally at least 2 seconds, optionally at least 2.5 seconds, optionally at least 3 seconds.

This may inhibit accidental enabling of the start-stop system (e.g., if the rotatable sleeve is accidentally knocked and twisted by an operator while reaching for another vehicle control device).

Optionally, the start-stop system is configured to only transition to the disabled state when the rotatable sleeve is held in the third sleeve position for more than a predetermined amount of time. Optionally, the predetermined amount of time comprises at least 0.5 seconds, optionally at least 1 second, optionally at least 1.5 seconds, optionally at least 2 seconds, optionally at least 2.5 seconds, optionally at least 3 seconds.

This may inhibit accidental disabling of the start-stop system (e.g., if the rotatable sleeve is accidentally knocked and twisted by an operator while reaching for another vehicle control device).

Optionally, when the start-stop system is in the enabled state and the rotatable sleeve is moved again from the first sleeve position to the second sleeve position and/or is held in the second sleeve position, the start-stop system remains in the enabled state.

Alternatively, when the start-stop system is in the enabled state and the rotatable sleeve is moved again from the first sleeve position to the second sleeve position and/or is held in the second sleeve position for more than a predetermined amount of time, the start-stop system may be configured to transition to a disabled state.

Optionally, the rotatable sleeve and/or the body and/or the push button comprises one or more visual indicia configured to indicate which rotational direction of the rotatable sleeve causes the start-stop system to transition to the enabled state.

This facilitates correct operation of the start-stop system by an operator.

In embodiments where the rotatable sleeve is twisted in a second direction to disable the start-stop system, the rotatable sleeve and/or the body and/or the push button may also comprise one or more visual indicia configured to indicate which rotational direction of the rotatable sleeve causes the start-stop system to transition to the disabled state.

Optionally, the rotatable sleeve and/or body comprises a state indicator configured to indicate whether the start-stop system is in the enabled state or not.

Such a state indicator provides a simple means of identifying the state of the start-stop system, independent of the position of the rotatable sleeve. This is particularly beneficial when the rotatable sleeve is biased to return to the first sleeve position.

Providing the state indicator on the rotatable sleeve facilitates a compact arrangement. Alternatively, providing the state indicator on the body may facilitate simpler electrical connections to the state indicator.

Optionally, the state indicator comprises an indicator light. Optionally, the start-stop system is configured to illuminate the indicator light in the enabled state.

Such an indicator light facilitates easy visual indication of the state of the start-stop system (e.g., in dim cabin conditions and/or using peripheral vision).

Optionally, the indicator light comprises an LED.

An LED provides a compact and energy-efficient type of indicator light.

Optionally, the indicator light is configured to emit green light in the enabled state.

Green is often associated with powering on of devices, so this may intuitively facilitate easier identification of the enabled state by an operator.

Optionally, the start-stop system is configured so that the indicator light operates in a first light configuration in the enabled state and in a second light configuration in the or a disabled state.

In this way, the indicator light may facilitate locating the start-stop system when in the disabled state via the second light configuration (e.g., for improved location in dark operating conditions), whilst still allowing the operator to identify when the start-stop system is in the enabled state via the first light configuration.

Optionally, the indicator light emits a first colour of light (e.g., green) in the first light configuration and a second colour of light (e.g., white or red) in the second light configuration.

Optionally, the indicator light is provided on the rotatable sleeve. This facilitates a compact and self-contained arrangement (e.g., instead of having to have a protruding portion of the body for providing the indicator light). Alternatively, the indicator light may be provided on the body or be a separate component mounted in a vehicle separate to the body, the push button and the rotatable sleeve.

Optionally, the push button comprises a light device configured to illuminate the push button and/or to indicate whether the start-stop system is in the enabled state and/or to indicate whether the prime mover is activated.

Such a light device facilitates easier location of the push button and/or visual indication of the state of the start-stop system or prime mover of the vehicle (e.g., in addition to or instead of the state indicator on the rotatable sleeve or body).

Indication of whether the prime mover is activated may be particularly useful for working vehicles which are used in noisy environments and/or for quiet prime movers such as electric motors, where it may not be possible to hear or feel whether the prime mover is activated.

Optionally, the start-stop system is configured so that the light device operates in different light configurations depending on whether the start-stop system is in the enabled state or not and/or depending on whether the prime mover is activated or not.

Optionally, the start-stop system is configured to pulse the light device and or to switch the light device between different colours depending on whether the start-stop system is in the enabled state or not and/or depending on whether the prime mover is activated or not.

Optionally, the light device comprises a backlit power symbol and/or text.

Optionally, the start-stop system is configured to pulse the light device in the enabled state when the prime mover is not activated, to indicate that the prime mover is ready to be activated.

This allows an operator to visually determine when the prime mover can be activated. This may be particularly beneficial for working vehicles which are used in noisy environments and/or for quiet prime movers such as electric motors, where it may not be possible to hear or feel whether the prime mover is activated.

Optionally, the start-stop system comprises a biasing element configured to act on the rotatable sleeve to automatically return the rotatable sleeve to the first sleeve position. Optionally, the biasing element comprises a spring element (e.g., a torsional spring) and/or an elastic element.

Optionally, the body and/or push button comprises a first stop formation and the rotatable sleeve comprises a second stop formation, wherein the first and second stop formations are configured to engage each other to inhibit rotation of the rotatable sleeve beyond the second sleeve position and/or third sleeve position.

Such stop formations provide a reliable operation of the start-stop system and protection of the means by which the rotatable sleeve is biased to return to the first sleeve position (e.g., protection against damage due to over-extension of a spring or elastic element).

Optionally, the second and/or third sleeve positions are angularly offset from the first sleeve position by around 10 to 150 degrees, optionally around 20 to 120 degrees, optionally around 30 to 90 degrees, optionally around 40 to 60 degrees).

Such an angular offset may be large enough to reduce the likelihood of unintentional movement to the second or third sleeve position (e.g., due to accidental knocking of the rotatable sleeve) but small enough to be easy to operate without excessive twisting of the operator's wrist.

Optionally, the rotatable sleeve comprises a ring which encircles the push button.

This may facilitate easier rotation of the rotatable sleeve in contrast to sleeves which only partially surround the push button. For example, an operator does not need to look carefully to identify where the rotatable sleeve is once they are aware of the rough position of the start-stop system.

Optionally, the rotatable sleeve comprises an outer circumferential surface having a plurality of grip formations for facilitating rotation of the rotatable sleeve around the push button. Optionally, the grip formations comprise radial projections and/or recesses in the outer circumferential surface.

Such grip formations facilitate easier rotation of the rotatable sleeve.

Optionally, each radial projection and/or recess spans at least 1% of a circumference of the outer circumferential surface, optionally at least 2%, optionally at least 3%, optionally at least 4%.

The grip formations spanning such a proportion of the circumference of the outer circumferential surface may provide a better grip function than alternatives, such as narrow splines or a dense array of small dots).

Optionally, when the prime mover is already activated and the push button is moved from the first button position to the second button position, the start-stop system is configured to deactivate the prime mover of the vehicle.

In this way, the push button can be used for both activation and deactivation of the prime mover. This offers an intuitive means for controlling activation of the prime mover.

Optionally, the start-stop system is configured to output a prime mover deactivation signal to deactivate the prime mover of the vehicle.

It will be understood that the prime mover deactivation signal may be the same signal as the prime mover activation signal (i.e., a single button signal may be output by the start-stop system corresponding to both the prime mover activation and deactivation signals). For example, the start-stop system may send the button signal to a prime mover control unit of the vehicle when the push button is moved from the first button position to the second button position. The prime mover control unit may monitor an activation state of the prime mover and either: activate the prime mover in response to the button signal (e.g., when the prime mover is deactivated prior to receiving the button signal); or deactivate the prime mover in response to the button signal (e.g., when the prime mover is activated prior to receiving the button signal).

Optionally, when the prime mover is deactivated in response to the push button being moved from the first button position to the second button position, the start-stop system is configured to remain in the enabled state until the rotatable sleeve is actuated subsequently to movement of the push button.

In this way, the start-stop system can remain enabled after deactivation of the prime mover (e.g., for quicker restarting of the prime mover and/or continued running of an accessory, such as a radio).

Optionally, when the prime mover is deactivated in response to the push button being moved from the first button position to the second button position, the start-stop system is configured to transition to the or a disabled state.

In this way, the start-stop system can be disabled automatically when the prime mover is deactivated.

Optionally, the push button is biased to automatically return from the second button position to the first button position.

Optionally, the start-stop system comprises a controller configured to detect movement of the push button and/or rotatable sleeve and, based on detected movement of the push button and/or rotatable sleeve, to set the enabled state and/or set the disabled state and/or activate the prime mover and/or deactivate the prime mover and/or output the or an enable signal and/or disable signal and/or prime mover activation signal and/or prime mover deactivation signal and/or to power the or a state indicator or indicator light.

Such a controller provides a simple means of controlling the start-stop system.

The controller may comprise a control unit of a vehicle (e.g., a prime mover control unit), and/or a separate dedicated control unit for the start-stop system.

Optionally, the controller is configured to determine whether the start-stop system has been in the enabled state for more than a predetermined amount of time. Optionally, the controller is also configured to determine whether the prime mover and/or other sub-systems of the vehicle are activated or not. Optionally, when it is determined that the start-stop system has been in the enabled state for more than the predetermined amount of time and that the prime mover and/or other sub-systems of the vehicle are not activated, the controller is configured to transition the start-stop system to the or a disabled state.

In this way, the start-stop system can be automatically disabled (e.g., if an operator forgets to manually turn it off).

Optionally, the start-stop system comprises a button sensing arrangement configured to send a button signal to the controller when the push button is moved from the first button position to the second button position.

Optionally, the start-stop system comprises a sleeve sensing arrangement which is configured to send a first sleeve signal to the controller when the rotatable sleeve is rotated from the first sleeve position to the second sleeve position.

Optionally, the start-stop system comprises a sleeve sensing arrangement which is configured to send a second sleeve signal to the controller when the rotatable sleeve is rotated from the first sleeve position to the or a third sleeve position.

Optionally, the controller is coupled to the body, or is separate to the body for mounting in a different part of the vehicle.

Optionally, the body comprises a shank portion for insertion into an aperture in the vehicle and a flange portion for abutting a surface of the vehicle surrounding the aperture. Optionally, the shank portion has a non-circular cross-section for inhibiting rotation of the shank portion in a corresponding non-circular aperture. Optionally, the shank portion comprises one or more longitudinal ribs for engaging a periphery of the aperture to inhibit axial movement of the shank portion out of the aperture.

Such a configuration facilitates simple mounting of the body in a vehicle.

Optionally, the start-stop system comprises an outer diameter in a range of around 20mm to 80mm, optionally in a range of around 30mm to 70mm, optionally in a range of around 40mm to 60m.

Such dimensions provide a good trade-off between compactness, ergonomics, and visual/tactile identification of the push button and rotatable sleeve within the vehicle.

Optionally, the start-stop system comprises an axial dimension extending from a flange portion of the body to an end surface of the push button and/or rotatable sleeve, the axial dimension being in a range of around 5mm to 30mm, optionally in a range of around 10mm to 25mm, optionally in a range of around 15mm to 20mm.

Such dimensions provide a good trade-off between compactness, ergonomics, and visual/tactile identification of the push button and rotatable sleeve within the vehicle.

A further aspect of the teachings provides a working vehicle comprising a prime mover and a start-stop system as disclosed herein.

Such a working vehicle benefits from the advantages of the start-stop system outlined above.

Optionally, the working vehicle is one or more of: a loader, a skid-steer loader, a dump truck, an excavator, a slew excavator, a backhoe loader, a telescopic handler, a rough-terrain or industrial forklift, a mobile elevated work platform, a compaction vehicle, a grader, a bulldozer, a tractor, a combine harvester, a self-propelled harvester, a sprayer, a timber harvester or a feller buncher.

Optionally, the prime mover comprises an internal combustion engine (e.g., a hydrogen or diesel-powered internal combustion engine) and/or the prime mover comprises an electric motor and the working vehicle further comprises an energy storage device (e.g., battery) for powering the electric motor.

### BRIEF DESCRIPTION OF DRAWINGS

Embodiments will now be described by way of example only with reference to the accompanying figures, in which:
Figure 1 is a side view of a working vehicle according to an embodiment;
Figure 2 is a side view of a working vehicle according to a further embodiment;
Figure 3 is a perspective view of a start-stop system according to an embodiment;
Figures 4A and 4B are side sectional views of the start-stop system of Figure 3, with a push button of the start-stop system in first and second button positions, respectively;
Figure 5 is a plan view of the start-stop system of Figures 3 to 4B, with a rotatable sleeve of the start-stop system in a first sleeve position;
Figure 6 is a plan view of the start-stop system of Figures 3 to 5, with the rotatable sleeve of the start-stop system in a second sleeve position;
Figure 7 is a plan view of the start-stop system of Figures 3 to 6, with the rotatable sleeve of the start-stop system in a third sleeve position;
Figure 8 is a schematic diagram of the start-stop system of Figures 3 to 7 and components of a working vehicle, according to an embodiment;
Figures 9A and 9B are different side views of the start-stop system of Figures 3 to 8;
Figure 10 is a flow chart showing a control method for the start-stop system of Figures 3 to 9B, according to an embodiment;
Figure 11 is a flow chart showing a control method for the start-stop system of Figures 3 to 9B, according to an embodiment; and
Figure 12 is a flow chart showing a control method for the start-stop system of Figures 3 to 9B, according to an embodiment.

### DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

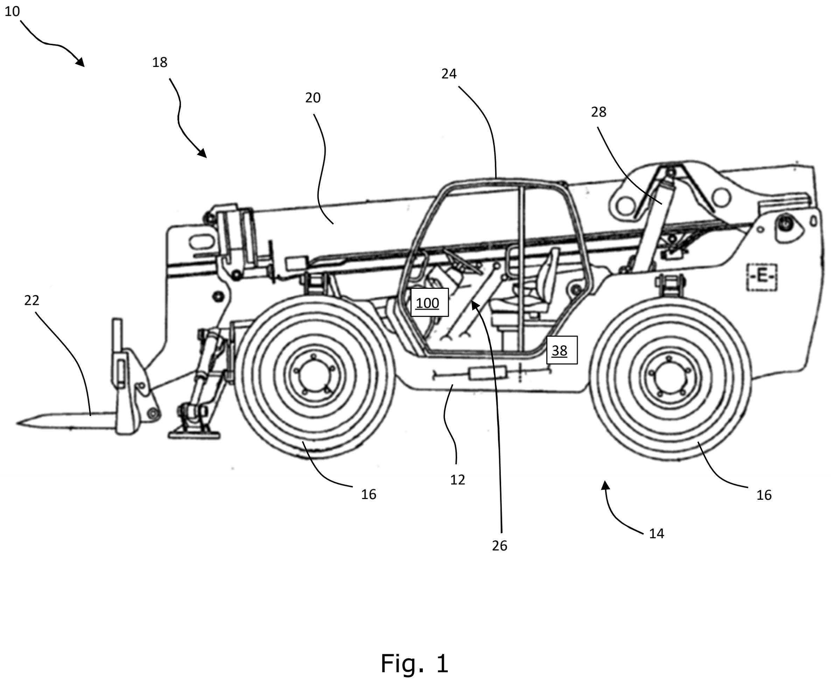

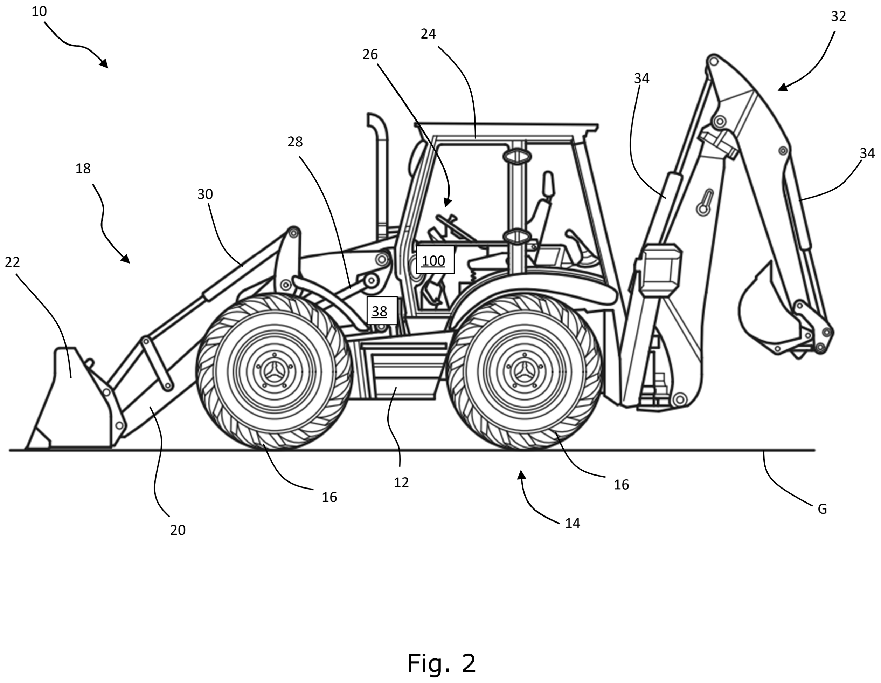

Figures 1 and 2 show working vehicles 10 which are examples of types of vehicles to which the claimed invention may be applied. It will be understood that these are just two examples, and that the invention is applicable to a wide variety of other vehicles (e.g., other working vehicles or non-working vehicles).

A working vehicle is an off-highway vehicle, for example those used in construction industries (e.g., backhoe loaders, excavators, slew excavators, telescopic handlers, forklifts, skid-steer loaders, dump trucks, bulldozers, graders), agricultural industries (e.g., tractors, combine harvesters, self-propelled harvesters, and sprayers), quarrying (e.g., loading shovels, dump trucks), and forestry (e.g., timber harvesters, feller bunchers).

In the embodiment of Figure 1, the working vehicle 10 is a telescopic handler. In the embodiment of Figure 2, the working vehicle 10 is a backhoe loader. However, it shall be appreciated that in other embodiments, the claimed invention may be applied to other forms of vehicle.

The working vehicles 10 depicted in Figures 1 and 2 each have a chassis 12, and a ground engaging propulsion structure 14 for moving the working vehicle 10 over a ground surface G. In particular, the ground engaging propulsion structure 14 includes four wheels 16 coupled to the chassis 12 for moving the chassis 12 over the ground surface G.

The working vehicles 10 of Figures 1 and 2 also have a load handling apparatus 18. The load handling apparatus 18 includes a working arm 20 which is pivotally attached to the chassis 12, and an implement 22 which is attached to an end of the working arm 20.

In the embodiment of Figure 1, the implement 22 is a fork. In the embodiment of Figure 2, the implement 22 is a shovel. In other embodiments, the implement 22 may be a bucket, or other type of implement (e.g., pallet fork, silage or manure fork, bale grab, lifting jib, etc.). In use, the load handling apparatus 18 may be used to lift and transport a payload received on or in the implement 22 (e.g., palletised goods, loose building material such as aggregates, agricultural products such as manure or silage, etc.).

The working vehicles 10 of Figures 1 and 2 also have a prime mover 38 (shown schematically on Figures 1 and 2) mounted to the chassis 12. The prime mover may include one or more internal combustion engines (e.g., hydrogen or diesel-powered internal combustion engines), and/or battery-powered electric motors, and/or any other suitable type of prime mover. In some embodiments, there may be both an internal combustion engine and a battery-powered electric motor (e.g., so called "hybrid" systems). The prime mover 38 may be used to drive the ground engaging propulsion structure 14 and/or the load handling apparatus 18.

In the embodiments of Figures 1 and 2, a cab 24 is further mounted to chassis 12. The cab 24 is provided with a collection of controls 26 for moving the load handling apparatus 18, manoeuvring the working vehicle 10 and/or controlling other functions of the working vehicle 10. As will be described in more detail below, one of the controls 26 is a start-stop system 100 (shown schematically in Figures 1 and 2) for activating the prime mover 38 and/or enabling other functions of the working vehicle 10.

In the embodiments of Figures 1 and 2, the load handling apparatus 18 is configured to be moved by a load handling hydraulic actuator 28. In particular, the load handling hydraulic actuator 28 is a lifting cylinder configured to pivot the working arm 20 of the load handling apparatus 18 upwards and downwards relative to the chassis 12. When the load handling hydraulic actuator 28 is at least partially extended, this causes the implement 22 of the load handling apparatus 18 to be raised off the ground (e.g., for transporting a payload carried by the implement 22 to another location).

In the embodiment of Figure 2, the implement 22 is pivotable relative to the working arm 20 by an implement actuator 30. Although not illustrated, a similar implement actuator 30 may be provided in the embodiment of Figure 1.

In the embodiment of Figure 1, the working arm 20 is a telescopic working arm. A telescoping actuator (not shown) may be provided to extend and retract the telescopic working arm 20.

In the embodiment of Figure 2, the working vehicle 10 also includes a backhoe 32, which may be used for excavating operations. The backhoe 32 is actuatable via a plurality of backhoe actuators 34.

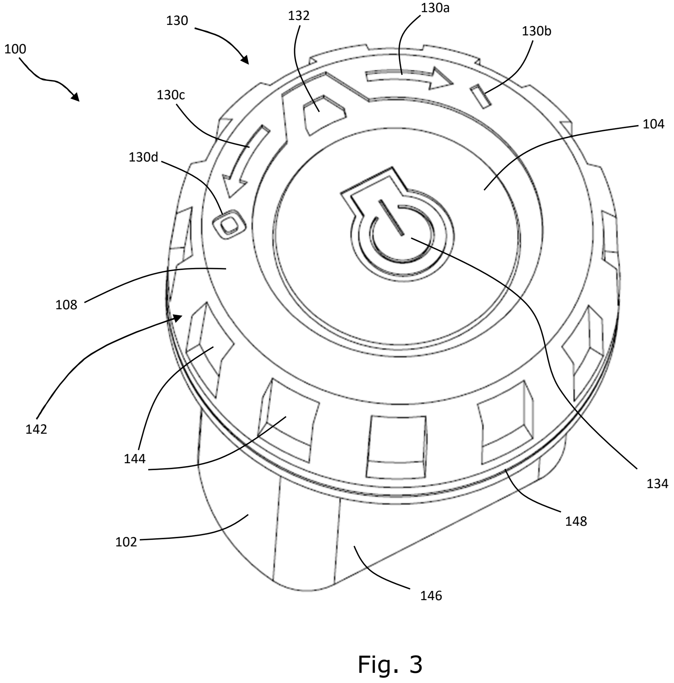

Referring now to Figures 3 to 9B, the start-stop system 100 of the working vehicles 10 of Figures 1 and 2 is illustrated.

The start-stop system 100 has a body 102 for mounting in the working vehicle 10. In the illustrated embodiment, the body 102 is configured for mounting in an aperture in an instrument panel. In particular, the body 102 has a shank portion 146 for insertion into an aperture in the working vehicle 10 and a flange portion 148 for abutting a surface of the working vehicle 10 surrounding the aperture.

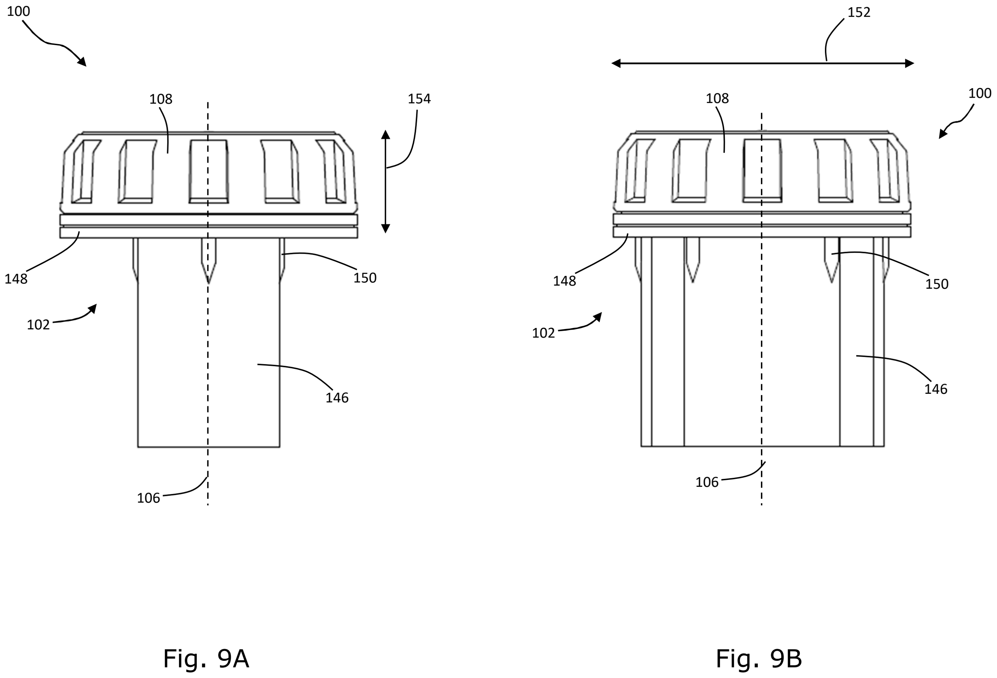

In the illustrated embodiment, the shank portion 146 has a non-circular cross-section for inhibiting rotation of the shank portion 146 in a corresponding non-circular aperture. For example, Figures 9A and 9B show first and second side views in which the shank portion 146 has different dimensions.

In the illustrated embodiment, the shank portion 146 has longitudinal ribs 150 for engaging a periphery of an aperture in the working vehicle 10, to inhibit axial movement of the shank portion 146 out of the aperture.

In other embodiments, the body 102 make take any suitable shape or form (e.g., the body 102 may be integral to a vehicle instrument panel).

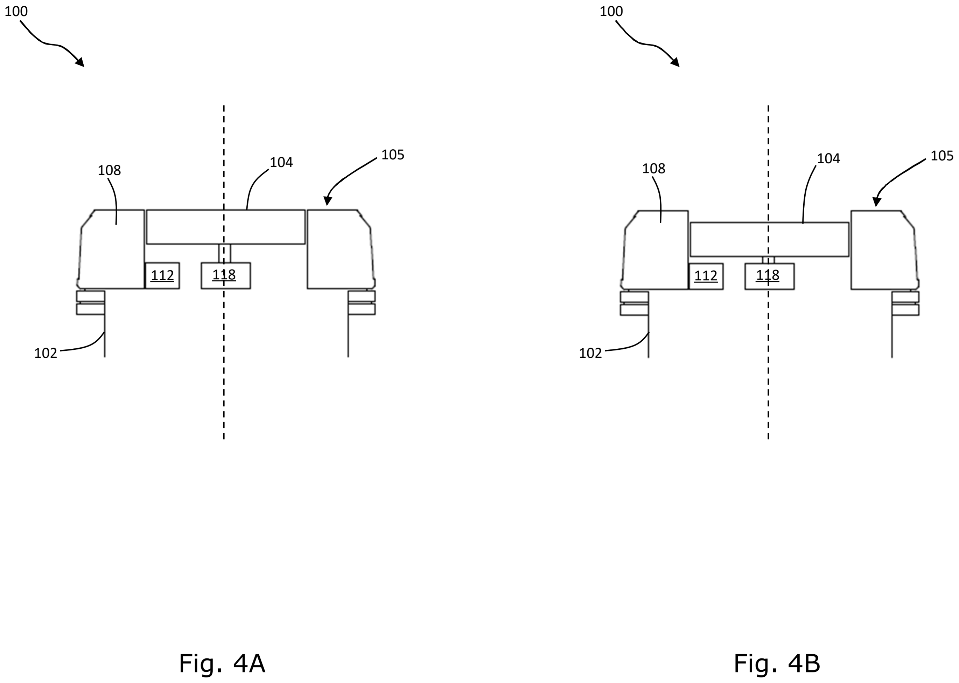

The start-stop system 100 also has a push button 104. The push button 104 is configured for linear movement relative to the body 102 along a longitudinal axis 106, between a first button position (as illustrated in Figure 4A) and a second button position (as illustrated in Figure 4B). In the first button position, the push button 104 is approximately flush with a free end 105 of the start-stop system 100. In the second button position, the push button 104 is depressed so that it is axially inboard of the free end 105. The push button 104 may be biased to automatically return from the second button position to the first button position (e.g., using a biasing element such as a spring, not shown).

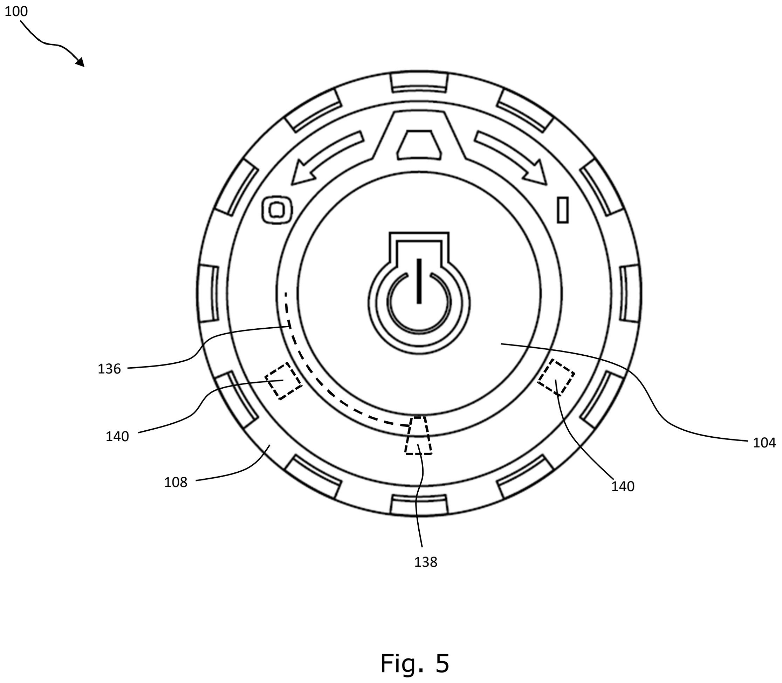

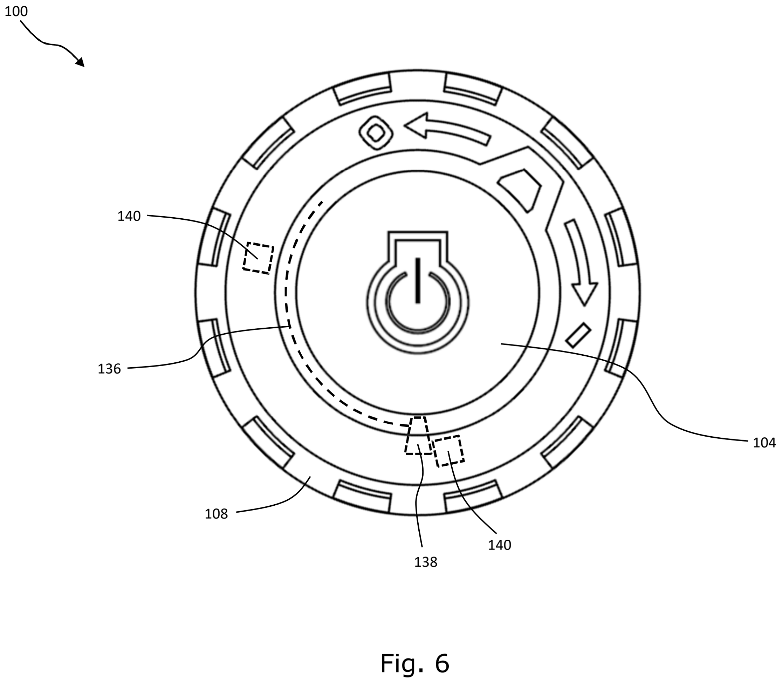

The start-stop system 100 also has a rotatable sleeve 108 which is positioned radially outboard of the push button 104 with respect to the longitudinal axis 106. The rotatable sleeve 108 is configured to rotate around the push button 104 between a first sleeve position (as illustrated in Figure 5) and a second sleeve position (as illustrated in Figure 6). The rotatable sleeve 108 is configured to rotate in a first rotational direction (i.e., a clockwise direction in the illustrated configuration) around the push button 104 to move from the first sleeve position to the second sleeve position. Conversely, the rotatable sleeve 108 is configured to rotate in a second rotational direction (i.e., an anticlockwise direction in the illustrated configuration) around the push button 104 to move from the second sleeve position to the first sleeve position.

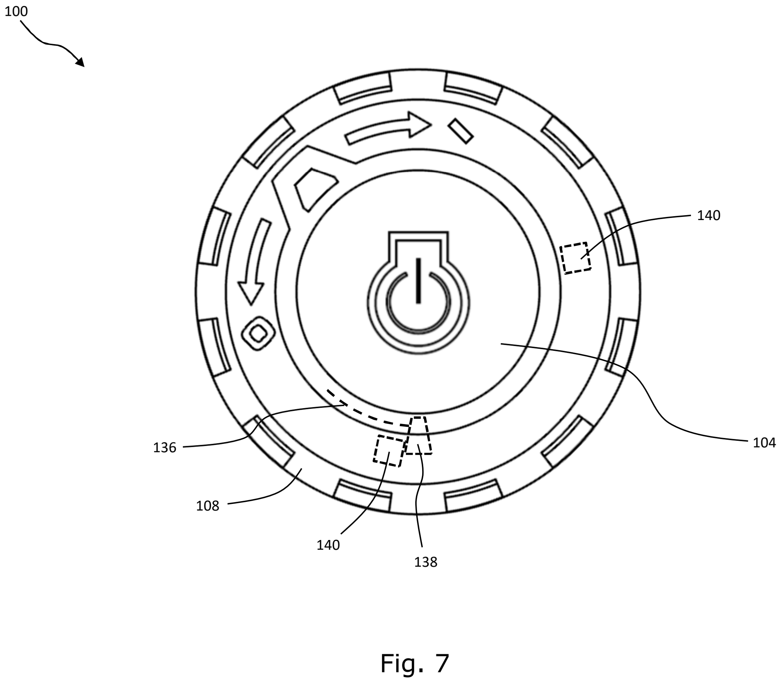

In the illustrated embodiment, the rotatable sleeve 108 is also configured to rotate in the second rotational direction around the push button 104 from the first sleeve position (as illustrated in Figure 5) to a third sleeve position (as illustrated in Figure 7). However, in other embodiments the rotatable sleeve 108 may be configured to only rotate between the first and second sleeve positions (e.g., the third sleeve position of Figure 7 may be omitted).

In the illustrated embodiment, the rotatable sleeve 108 is biased to automatically return from the second sleeve position to the first sleeve position. In other words, the rotatable sleeve 108 will only remain in the second sleeve position illustrated in Figure 6 for as long as it is held there manually by a user. When the user lets go of the rotatable sleeve 108 in the second sleeve position, it automatically returns to the first sleeve position illustrated in Figure 5. In other embodiments, the rotatable sleeve 108 may not be biased to automatically return from the second sleeve position to the first sleeve position (e.g., the rotatable sleeve 108 may be latched in the second sleeve position, either mechanically or electrically).

In the illustrated embodiment, the rotatable sleeve 108 is biased to automatically return from the third sleeve position to the first sleeve position. In other words, the rotatable sleeve 108 will only remain in the third sleeve position illustrated in Figure 7 for as long as it is held there manually by a user. When the user lets go of the rotatable sleeve 108 in the third sleeve position, it automatically returns to the first sleeve position illustrated in Figure 5. In other embodiments, the rotatable sleeve 108 may not be biased to automatically return from the third sleeve position to the first sleeve position (e.g., the rotatable sleeve 108 may be latched in the third sleeve position, either mechanically or electrically).

In the illustrated embodiment, the start-stop system 100 has a biasing element 136 which is configured to act on the rotatable sleeve 108 to automatically return the rotatable sleeve 108 to the first sleeve position illustrated in Figure 5. The biasing element is illustrated schematically on Figures 5 to 7, but may be of any suitable kind such as a spring element (e.g., a torsional spring) and/or an elastic element.

Having the rotatable sleeve 108 biased to return to the first sleeve position (e.g., instead of latching in the second and/or third sleeve positions) facilitates a greater range of control options, as described in more detail below. However, in other embodiments the rotatable sleeve 108 may latch in one or more of the second and third sleeve positions.

In the illustrated embodiment, the body 102 and/or push button 104 has a first stop formation 138 and the rotatable sleeve 108 has second stop formations 140. The first and second stop formations 140 are configured to engage each other to inhibit rotation of the rotatable sleeve 108 beyond the second sleeve position and/or third sleeve position. The first and second stop formations 138, 140 are illustrated schematically on Figures 5 to 7, but may be of any suitable size or shape.

In the illustrated embodiment, the second and third sleeve positions are both angularly offset from the first sleeve position by around 45 degrees in the first and second rotational directions, respectively. Such an angular offset may be large enough to reduce the likelihood of unintentional movement to the second or third sleeve position (e.g., due to accidental knocking of the rotatable sleeve 108). Such an angular offset may also be small enough to be easy to operate without excessive twisting of the operator's wrist. Other angular offsets may be used in other embodiments (e.g., around 10 to 150 degrees, e.g., around 20 to 120 degrees, e.g., around 30 to 90 degrees, e.g., around 40 to 60 degrees).

In the illustrated embodiment, the rotatable sleeve 108 is a ring which encircles the push button 104. However, the rotatable sleeve 108 may have other configurations (e.g., being semi-annular to partially surround the push button 104).

In the illustrated embodiment, the rotatable sleeve 108 has an outer circumferential surface 142 having a plurality of grip formations 144 for facilitating rotation of the rotatable sleeve 108 around the push button 104. In the illustrated embodiment, the grip formations 144 are radial recesses in the outer circumferential surface 142, but in other embodiments they may be radial projections instead of or in addition to the radial recesses. In some embodiments, each radial recess 144 spans at least 1% of a circumference of the outer circumferential surface 142. For example, in the illustrated configuration the radial recesses 144 each span around 4% of the outer circumferential surface 142 (i.e., approximately 15 degrees).

As illustrated on Figure 9B, the start-stop system 100 has an outer diameter 152 (e.g., defined by the outer circumferential surface 142). The outer diameter 152 may be in a range of around 20mm to 80mm, e.g., in a range of around 30mm to 70mm, e.g., in a range of around 40mm to 60m.

As illustrated on Figure 9A, the start-stop system 100 also has an axial dimension 154 extending from the flange portion 148 of the body 102 to an end surface of the push button 104 and rotatable sleeve 108 (e.g., to the free end 105 of the start-stop system 100). The axial dimension may be in a range of around 5mm to 30mm, e.g., in a range of around 10mm to 25mm, e.g., in a range of around 15mm to 20mm.

The function of the start-stop system 100 will now be described in more detail.

The start-stop system 100 is configured to transition to an enabled state when the rotatable sleeve 108 is moved from the first sleeve position to the second sleeve position. The enabled state of the start-stop system 100 is a state in which action can be taken by the operator to activate the prime mover 38 of the working vehicle 10. In particular, when the start-stop system 100 is in the enabled state and the push button 104 is moved from the first button position to the second button position, the start-stop system 100 is configured to activate the prime mover 38 (e.g., by outputting a prime mover activation signal 126).

It will be understood that the means by which the prime mover 38 is activated (e.g., in response to the prime mover activation signal 126) will vary depending on the type of prime mover 38. For example, where the prime mover 38 is an internal combustion engine, activation of the prime mover 38 may comprise cranking a starter motor 40 to start the internal combustion engine. Where the prime mover 38 is an electric motor, activation of the prime mover may comprise closing a switch and/or setting a software flag which allows electric energy to be supplied from an electric energy storage device (e.g., battery) to the electric motor.

In some embodiments, when the prime mover 38 is already activated and the push button 104 is moved from the first button position to the second button position, the start-stop system 100 is configured to deactivate the prime mover 38 (e.g. by outputting a prime mover deactivation signal 128). In other words, the push button 104 may be used to toggle the prime mover 38 between activated and deactivated states.

It will be understood that the means by which the prime mover 38 is deactivated (e.g., in response to the prime mover deactivation signal 128) will vary depending on the type of prime mover 38. For example, where the prime mover 38 is an internal combustion engine, deactivation of the prime mover 38 may comprise closing a fuel supply to stop the internal combustion engine. Where the prime mover 38 is an electric motor, deactivation of the prime mover 38 may comprise opening a switch and/or setting a software flag which inhibits electric energy from being supplied from an electric energy storage device (e.g., battery) to the electric motor.

In the illustrated embodiment, the prime mover deactivation signal 128 is a separate signal to the prime mover activation signal 126. However, it will be understood that the prime mover deactivation signal 128 may be the same signal as the prime mover activation signal 126 (i.e., a single button signal may be output by the start-stop system 100 corresponding to both the prime mover activation and deactivation signals 126, 128). For example, the start-stop system 100 may send the single button signal to a prime mover control unit of the vehicle working 10 whenever the push button 104 is moved from the first button position to the second button position. The prime mover control unit may monitor an activation state of the prime mover 38 and either: activate the prime mover 38 in response to the single button signal (e.g., when the prime mover 38 is deactivated prior to receiving the single button signal); or deactivate the prime mover 38 in response to the single button signal (e.g., when the prime mover 38 is activated prior to receiving the single button signal).

In the illustrated embodiment, the start-stop system 100 is configured to transition to a disabled state when the rotatable sleeve 108 is moved from the first sleeve position to the third sleeve position. The disabled state of the start-stop system 100 is a state in which action cannot be taken by the operator to activate the prime mover 38 of the working vehicle 10. In particular, when the start-stop system 100 is in the disabled state and the push button 104 is moved from the first button position to the second button position, the start-stop system 100 does not activate the prime mover 38 (e.g., by inhibiting output of the prime mover activation signal 126).

In the illustrated embodiment, when the start-stop system 100 is in the enabled state and the rotatable sleeve 108 is moved again from the first sleeve position to the second sleeve position and/or is held in the second sleeve position, the start-stop system 100 remains in the enabled state.

In other configurations (e.g., those where the third sleeve position is omitted), the start-stop system 100 may be configured to toggle between the enabled and disabled states when the rotatable sleeve is moved from the first sleeve position to the second sleeve position. For example, when the start-stop system 100 is in the enabled state, rotation to the second sleeve position may switch the start-stop system 100 to the disabled state. Conversely, when the start-stop system 100 is in the disabled state, rotation to the second sleeve position may switch the start-stop system 100 to the disabled state.

In some embodiments, the start-stop system 100 is configured to only transition to the enabled state when the rotatable sleeve 108 is held in the second sleeve position for more than a predetermined amount of time (e.g., at least 0.5 seconds, e.g., at least 1 second, e.g., at least 1.5 seconds, e.g., at least 2 seconds, e.g., at least 2.5 seconds, e.g., at least 3 seconds). This may inhibit accidental enabling of the start-stop system 100 (e.g., if the rotatable sleeve 108 is accidentally knocked and twisted by an operator while reaching for another vehicle control device).

Similarly, the start-stop system 100 may be configured to only transition to the disabled state when the rotatable sleeve 108 is held in the third sleeve position (or second sleeve position when toggling between states) for more than a predetermined amount of time (e.g., at least 0.5 seconds, e.g., at least 1 second, e.g., at least 1.5 seconds, e.g., at least 2 seconds, e.g., at least 2.5 seconds, e.g., at least 3 seconds). This may inhibit accidental disabling of the start-stop system 100 (e.g., if the rotatable sleeve 108 is accidentally knocked and twisted by an operator while reaching for another vehicle control device).

In some embodiments, the start-stop system 100 is configured to deactivate the prime mover 38 of the working vehicle 10 (e.g. by outputting a prime mover deactivation signal 128) when the start-stop system 100 is moved from the first sleeve position to the third sleeve position (or when the rotatable sleeve 108 is moved to the second position to toggle from the enabled state to the disabled state).

For example, the start-stop system 100 may be configured to simultaneously deactivate the prime mover 38 and to transition to the disabled state when the rotatable sleeve 108 is moved from the first sleeve position to the third sleeve position (or when the rotatable sleeve 108 is moved to the second position to toggle from the enabled state to the disabled state).

In other embodiments, when the prime mover 38 is activated and the rotatable sleeve 108 is moved from the first sleeve position to the third sleeve position (or to the second sleeve position), the start-stop system 100 may be configured to only deactivate the prime mover 38 (i.e., the start-stop system 100 may remain in the enabled state). In such embodiments, moving the rotatable sleeve 108 from the first sleeve position to the third sleeve position (or to the second sleeve position) for a second time (i.e., after the prime mover 38 has been deactivated) may set the start-stop system 100 to the disabled state.

In other embodiments, the start-stop system 100 is not configured to deactivate the prime mover 38 in response to rotation of the rotatable sleeve 108. For example, when the prime mover 38 is activated, movement of the rotatable sleeve 108 may have no effect on the state of the prime mover 38 and the start-stop system 100 may remain in the enabled state. In such configurations, deactivation of the prime mover 38 may be triggered solely by movement of the push button 104 instead.

In some embodiments, when the prime mover 38 is deactivated in response to the push button 104 being moved from the first button position to the second button position, the start-stop system 100 is configured to remain in the enabled state until the rotatable sleeve 108 is actuated subsequently to movement of the push button 104. In this way, the start-stop system 100 can remain enabled after deactivation of the prime mover 38 (e.g., for quicker restarting of the prime mover 38 and/or continued running of an accessory 42, such as a radio or lights).

In other embodiments, when the prime mover 38 is deactivated in response to the push button 104 being moved from the first button position to the second button position, the start-stop system 100 is configured to transition to the disabled state. In this way, the start-stop system 100 can be disabled automatically when the prime mover 38 is deactivated.

In the illustrated embodiment, the rotatable sleeve 108 has one or more visual indicia 130 configured to indicate which rotational direction of the rotatable sleeve 108 causes the start-stop system 100 to transition to the enabled state and/or disabled state. For example, Figure 3 illustrates visual indicia 130 on the rotatable sleeve 108 in the form of a clockwise arrow symbol 130a pointing towards an "on" symbol 130b. This indicates that clockwise turning of the rotatable sleeve 108 enables the start-stop system 100. Similarly, there is an anticlockwise arrow symbol 130c pointing towards an "off" symbol 130d. This indicates that anticlockwise turning of the rotatable sleeve 108 disables the start-stop system 100. Other suitable indicia may be used in alternative embodiments. Furthermore, the visual indicia 130 may be at least partly provided on the body 102 and/or the push button 104 in other embodiments.

In the illustrated embodiment, a state indicator 132 is provided to indicate whether the start-stop system 100 is in the enabled state or not. This provides a simple means of identifying the state of the start-stop system 100, independently of the position of the rotatable sleeve 108. This is particularly beneficial when the rotatable sleeve 108 is biased to return to the first sleeve position.

As illustrated in Figure 3, the state indicator 132 is provided on the rotatable sleeve 108. In other embodiments, the state indicator 132 may be provided on the body 102 and/or push button 104.

The state indicator 132 may be an indicator light, and the start-stop system 100 may be configured to illuminate the indicator light 132 in the enabled state. In some embodiments, the indicator light 132 is an LED.

In some embodiments, the indicator light 132 is configured to emit green light in the enabled state.

In some embodiments, the start-stop system 100 is configured so that the indicator light 132 operates in a first light configuration in the enabled state and in a second light configuration in the or a disabled state. For example, the indicator light may emit a first colour of light (e.g., green) in the first light configuration and a second colour of light (e.g., white or red) in the second light configuration. In this way, the indicator light 132 may facilitate locating the start-stop system 100 when in the disabled state via the second light configuration (e.g., for improved location in dark operating conditions), whilst still allowing the operator to identify when the start-stop system 100 is in the enabled state via the first light configuration.

In the illustrated embodiment, the push button 104 has a light device 134. As illustrated in Figure 3, the light device 134 is a backlit power symbol. In other embodiments, the light device 134 may include backlit text or another type of light device.

The light device 134 is configured to illuminate the push button 104, which makes it easier to locate for starting and stopping the prime mover 38.

In some embodiments, the light device 134 may be configured to indicate whether the start-stop system 100 is in the enabled state or not (e.g., in addition to, or instead of the state indicator 132). For example, the start-stop system 100 may be configured so that the light device 134 operates in different light configurations depending on whether the start-stop system 100 is in the enabled state or not. For example, the start-stop system 100 may be configured to pulse the light device 134 in the enabled state when the prime mover 38 is not activated, to indicate that the prime mover 38 is ready to be activated. Alternatively, or additionally, the light device 134 may be configured to emit different coloured light in the enabled and disabled states.

In some embodiments, the light device 134 may be configured to indicate whether the prime mover 38 is activated. For example, the start-stop system 100 may be configured so that the light device 134 operates in different light configurations depending on whether the prime mover 38 is activated or not. For example, the light device 134 may be configured to emit different coloured light when the prime mover 38 is activated and deactivated. Alternatively, or additionally, the start-stop system 100 may be configured to pulse the light device 134 differently in different activation states of the prime mover 38.

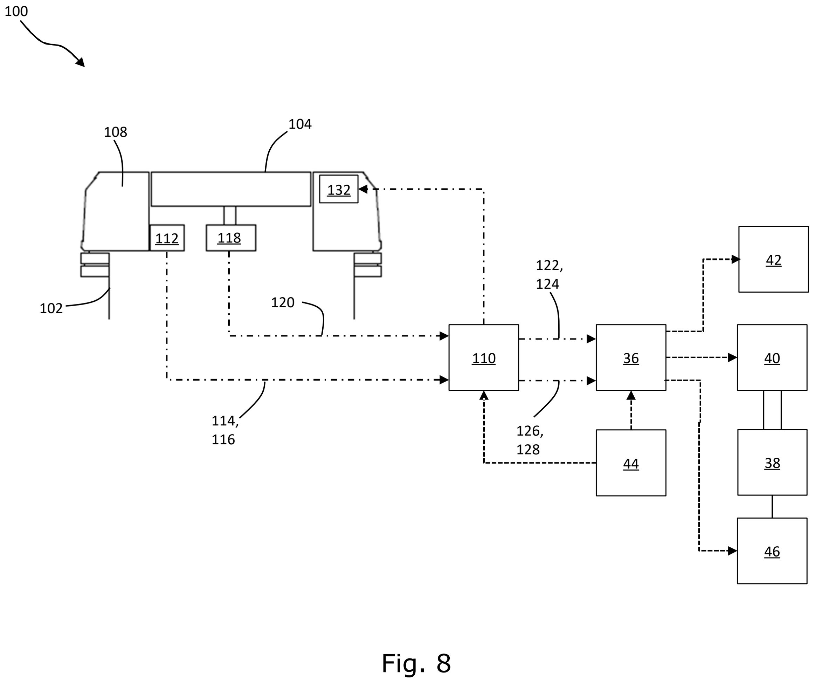

In the configuration illustrated in Figure 8, the start-stop system 100 includes a controller 110 which is configured to detect movement of the push button 104 and rotatable sleeve 108, and to update the state of the start-stop system 100 and/or output control signals 122, 124, 126, 128 accordingly. The controller 110 is shown schematically but may be positioned at any suitable location (e.g., coupled to the body 102, or separate to the body 102 for mounting in a different part of the working vehicle 10). The controller 110 may be part of a control unit of the working vehicle 10 (e.g., a prime mover control unit), and/or a separate dedicated control unit for the start-stop system 100 (as illustrated in Figure 8).

The controller 110 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller 110 may include an associated memory or the memory may be located locally to the controller 110 or remotely. The memory may be a non-volatile flash memory.

The start-stop system 100 has a sleeve sensing arrangement 112 which is configured to send a first sleeve signal 114 to the controller 110 when the rotatable sleeve 108 is rotated from the first sleeve position to the second sleeve position. In response to receiving the first sleeve signal 114, the controller 110 is able to determine that the rotatable sleeve 108 has been moved to the second sleeve position and to set one of more output signals accordingly. The sleeve sensing arrangement 112 may be of any suitable kind (e.g., a rotary encoder, potentiometer, hall effect sensor, electromagnetic induction sensor, a rotary variable differential transformer, etc.).

In the illustrated embodiment, the sleeve sensing arrangement 112 is also configured to send a second sleeve signal 116 to the controller 110 when the rotatable sleeve 108 is rotated from the first sleeve position to the third sleeve position. In response to receiving the second sleeve signal 116, the controller 110 is able to determine that the rotatable sleeve 108 has been moved to the third sleeve position. In configurations where the third sleeve position is omitted, the second sleeve signal 116 may be omitted accordingly.

The start-stop system 100 also has a button sensing arrangement 118 which is configured to send a button signal 120 to the controller 110 when the push button 104 is moved from the first button position to the second button position. In response to receiving the button signal 120, the controller 110 is able to determine that the push button 104 has been moved to the second button position and to set one of more output signals accordingly. The button sensing arrangement 118 may be of any suitable kind (e.g., including a momentary or latching switch).

In the configuration of Figure 8, the controller 110 sends the prime mover activation signal 126 and/or prime mover deactivation signal 128 to a vehicle control unit 36 of the working vehicle 10. In this configuration, the prime mover 38 is an internal combustion engine and, in response to receiving the prime mover activation signal 126, the vehicle control unit 36 directs electrical energy from a battery 44 of the working vehicle 10 to a starter motor 40 for cranking the prime mover 38 (e.g., via the vehicle control unit 36, as illustrated in Figure 8, and/or via closing of a switch between the battery 44 and the starter motor 40). In response to receiving the prime mover deactivation signal 128 the vehicle control unit 36 may actuate a shut-down component 46 (e.g., a fuel or air shut-off valve) to deactivate the prime mover 38. In alternative embodiments where the prime mover 38 is of a different kind (e.g., an electric motor), a different configuration may be provided.

It will be understood that the controller 110 and vehicle control unit 36 may be co-located and/or provided as a common component. In such embodiments, the prime mover activation signal 126 may be sent directly from the controller 110 to the starter motor 40 (or a component which controls the starter motor 40, such as a switch), and the prime mover deactivation signal 128 may be sent directly to the shut-down component 46. Alternatively, the prime mover activation signal 126 and prime mover deactivation signal 128 may be omitted and instead correspond to internal operations within the controller 110.

In the configuration illustrated in Figure 8, the start-stop system 100 is configured in the enabled state to output an enable signal 122. In particular, the controller 110 sends the enable signal 122 to the vehicle control unit 36. In this way, the vehicle control unit 36 may activate one or more sub-systems required for activation of the prime mover 38 in advance of activating the prime mover 38. For example, an ignition of the working vehicle 10 may be activated. In addition, one or more vehicle accessory systems 42 may be activated in response to the enable signal 122 being received by the vehicle control unit 36 (e.g., radio, lights, HVAC systems, sensors, gauges, etc.).

In the configuration illustrated in Figure 8, the start-stop system 100 is configured in the disabled state to output a disable signal 124. In particular, the controller 110 sends the disable signal 124 to the vehicle control unit 36. In this way, the vehicle control unit 36 may deactivate relevant sub-systems of the working vehicle 10.

In some embodiments, the controller 110 is configured to determine whether the start-stop system 100 has been in the enabled state for more than a predetermined amount of time (e.g. greater than 1 minute, greater than 5 minutes, greater than 10 minutes, etc.). The controller 110 may also be configured to determine whether the prime mover 38 and/or other sub-systems of the working vehicle 10 are activated or not (e.g., using feedback signals from the vehicle control unit 36 and/or via open loop determination from the prime mover activation/deactivation signals 126, 128). When the controller 110 determines that the start-stop system 100 has been in the enabled state for more than the predetermined amount of time and that the prime mover 38 and/or other sub-systems of the working vehicle 10 are not activated, the controller 110 may be configured to transition the start-stop system 100 to the disabled state. In this way, the start-stop system 100 can be automatically disabled (e.g., if an operator forgets to manually turn it off).

In some embodiments, the controller 100 is configured to set different output signals when the rotatable sleeve 108 is rotated to the second position and/or third position, depending on the length of time which the rotatable sleeve 108 is held in the second position and/or third position. For example, the controller 110 may be configured to determine from the first and/or second sleeve signals 114, 116 how long the rotatable sleeve 108 has been held in the second and/or third sleeve positions. When it is determined that the rotatable sleeve 108 has been held in such a position for greater than a predetermined amount of time (e.g., greater than 0.5 seconds, e.g., greater than 1 second, e.g., greater than 2 seconds, e.g., greater than 3 seconds, e.g., greater than 4 seconds, e.g., greater than 5 seconds, e.g., greater than 6 seconds, e.g., greater than 7 seconds, e.g., greater than 8 seconds), the controller 110 may be configured to send additional output signals. For example, when the rotatable sleeve 108 is held in the second sleeve position for greater than the predetermined amount of time, the controller 110 may send a signal to activate an accessory device 42, such as a radio, in addition to transitioning to the enabled state. As another example, when the rotatable sleeve 108 is held in the third position for greater than a predetermined amount of time, the controller may send the prime mover deactivation signal 128 and the disable signal 124, instead of just the prime mover deactivation signal 128.

In some embodiments, the controller 110 is configured to set different output signals when the rotatable sleeve 108 is rotated to the second position and/or third position more than once within a given timeframe. For example, this may be analogous to a double-click function in which repeated actuation in quick succession produces a different output than a single actuation.

The controller 110 may set a software flag to an "enabled" or "disabled" condition, in order to store and monitor the state of the start-stop system 100.

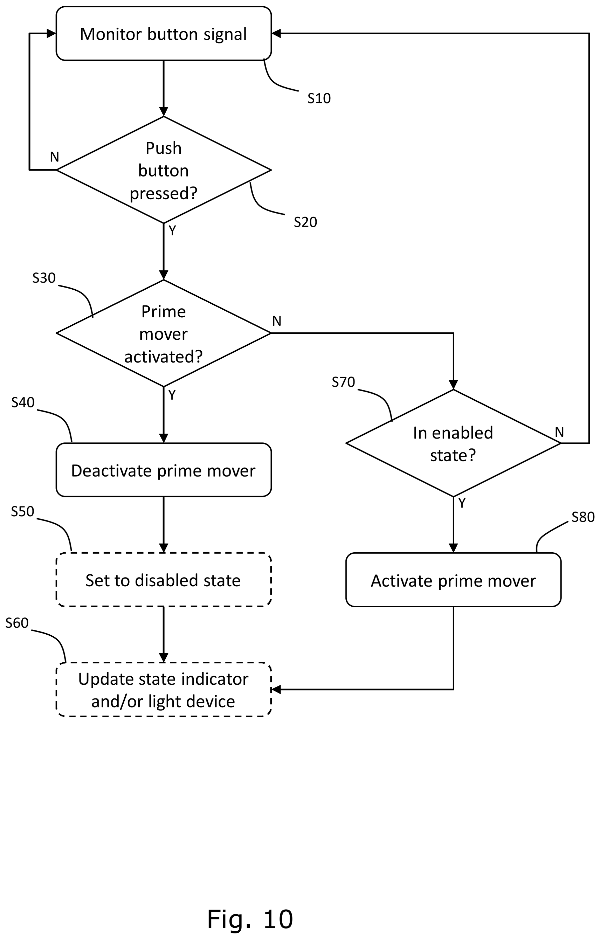

Referring now to Figures 10 to 12, flow charts for different control methods that may be implemented by the controller 110 are illustrated.

In Figure 10, the controller 110 is configured to monitor the button signal 120 from the button sensing arrangement 118 (at step S10). The controller 110 uses the monitored button signal 120 to determine when the push button 104 has been pressed (at step S20). When it is determined that the push button 104 has been pressed, the controller 110 determines whether the prime mover 38 is activated or not (at step S30).

If it is determined that the prime mover 38 is activated, the controller 110 activates the prime mover 38 (at step S40). For example, the controller 110 may output a prime mover deactivation signal 128. The controller 110 may also optionally set the start-stop system 100 to the disabled state (at step S50). The controller 110 may also optionally send an update the state indicator 132 and/or light device 134 accordingly (at step S60). For example, the controller 110 may send an output signal to update the state indicator 132 and/or light device 134.

If it is determined that the prime mover 38 is not activated, the controller 110 checks whether the start-stop system is in the enabled state (at step S70). If the start-stop system 100 is not in the enabled state, the controller 110 takes no action and returns to step S10. If the start-stop system 100 is in the enabled state, the controller 110 activates the prime mover 38 (at step S80). For example, the controller 110 may output a prime mover activation signal 126. The controller 110 may also optionally update the state indicator 132 and/or light device 134 accordingly (at step S60). For example, the controller 110 may send an output signal to update the state indicator 132 and/or light device 134.

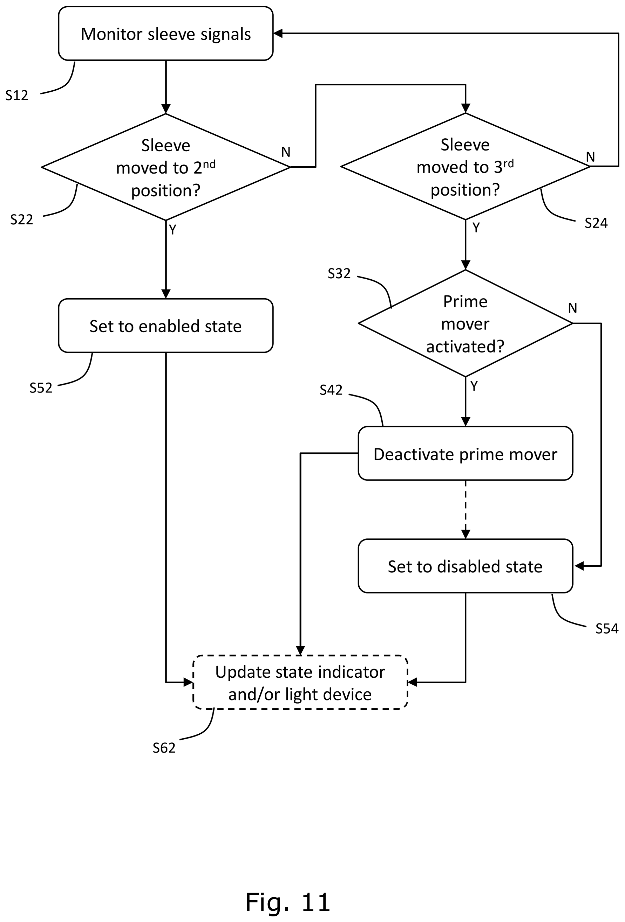

In Figure 11, the controller 110 is configured to monitor the first and second sleeve signals 114, 116 from the sleeve sensing arrangement 112 (at step S12). The controller 110 uses the monitored sleeve signals 114, 116 to determine when the rotatable sleeve has been moved to the second sleeve position (at step S22) or third sleeve position (at step S24).

When it is determined that the rotatable 108 sleeve has been moved to the second sleeve position, the controller 110 sets the start-stop system 100 to the enabled state (at step S52). The controller 110 may also optionally update the state indicator 132 and/or light device 134 accordingly (at step S62). For example, the controller 110 may send an output signal to update the state indicator 132 and/or light device 134.

When it is determined that the rotatable 108 sleeve has been moved to the third sleeve position, the controller 110 checks whether the prime mover 38 is activated (at step S32).

If it is determined at step S32 that the prime mover 38 is activated, the controller 110 deactivates the prime mover 38 (at step S42) and, in some embodiments, also sets the start-stop system 100 to the disabled state (at step S54).

If it is determined at step S32 that the prime mover 38 is not activated, the controller 110 sets the start-stop system 100 to the disabled state (at step S54).

Following steps S42 and/or S54, the controller 110 may also optionally update the state indicator 132 and/or light device 134 accordingly (at step S62). For example, the controller 110 may send an output signal to update the state indicator 132 and/or light device 134.

In other embodiments, step S32 is omitted. For example, when it is determined that the rotatable sleeve has moved to the third sleeve position, the controller 110 may send a prime mover deactivation signal 128 (at step S42) and set the start-stop system to the disabled state, regardless of the state of the prime mover 38 (although it will be understood that if the prime mover 38 is already deactivated, the prime mover deactivation signal 128 will have no effect).

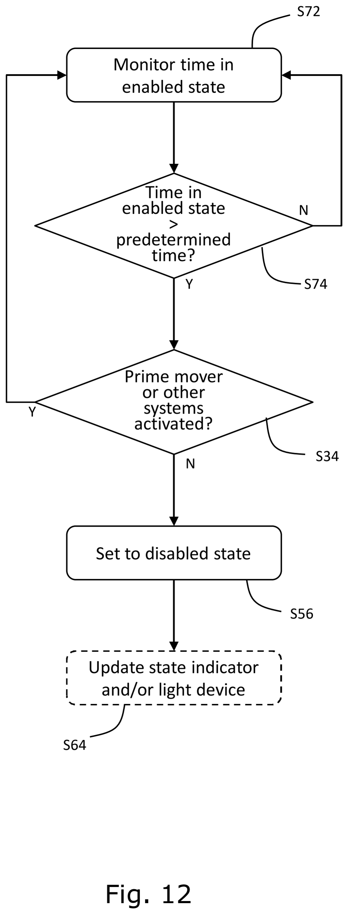

In Figure 12, the controller 110 is configured to monitor how long the start-stop system 100 has been in the enabled state (at step S72). The controller 110 determines whether the time spent in the enabled state is greater than a predetermined amount of time (at step S74).

If the controller 110 determines that the amount of time spent in the enabled state is less than the predetermined amount of time, the controller 110 continues to monitor at step S72.

If the controller 110 determines that the amount of time spent in the enabled state is greater than the predetermined amount of time, the controller 110 checks whether the prime mover 38 and/or other sub-systems of the working vehicle 10 are activated (at step S34).

If the controller 110 determines at step S34 that the prime mover 38 and/or one or more other sub-systems of the working vehicle 10 are activated, the controller 110 continues to monitor at step S72.

If the controller 110 determines at step S34 that the prime mover 38 and other sub-systems of the working vehicle 10 are not activated, the controller 110 sets the start-stop system to the disabled state (at step S56). The controller 110 may also optionally update the state indicator 132 and/or light device 134 accordingly (at step S64). For example, the controller 110 may send an output signal to update the state indicator 132 and/or light device 134.

The one or more embodiments are described above by way of example only and it will be appreciated that the variations are possible without departing from the scope of protection afforded by the appended claims.

It should also be noted that whilst the appended claims set out particular combinations of features described above, the scope of the present disclosure is not limited to the particular combinations hereafter claimed, but instead extends to encompass any combination of features herein disclosed.

## Claims

1. A start-stop system for a working vehicle, the start-stop system comprising:
a body for mounting in a vehicle;
a push button configured for linear movement relative to the body along a longitudinal axis between a first button position and a second button position;
a rotatable sleeve positioned radially outboard of the push button with respect to the longitudinal axis and configured to rotate around the push button between a first sleeve position and a second sleeve position;
wherein the start-stop system is configured to transition to an enabled state when the rotatable sleeve is moved from the first sleeve position to the second sleeve position;
wherein the start-stop system is configured to activate a prime mover of the vehicle when the start-stop system is in the enabled state and the push button is moved from the first button position to the second button position;
wherein the rotatable sleeve is biased to automatically return from the second sleeve position to the first sleeve position.

2. The start-stop system of claim 1, wherein the start-stop system is configured in the enabled state to output an enable signal to a sub-system of the vehicle; and/or wherein the start-stop system is configured to output a prime mover activation signal in order to activate the prime mover.

3. The start-stop system of claim 1 or 2, wherein the rotatable sleeve is configured to rotate in a first rotational direction around the push button from the first sleeve position to the second sleeve position, and wherein the rotatable sleeve is configured to rotate in a second rotational direction around the push button from the first sleeve position to a third sleeve position; optionally, wherein the rotatable sleeve is biased to automatically return from the third sleeve position to the first sleeve position and/or optionally wherein the start-stop system is configured to deactivate the prime mover of the vehicle when the rotatable sleeve is moved from the first sleeve position to the third sleeve position; optionally, wherein the start-stop system is configured to output a prime mover deactivation signal to deactivate the prime mover.

4. The start-stop system of claim 3, wherein the start-stop system is configured to transition to a disabled state when the rotatable sleeve is moved from the first sleeve position to the third sleeve position; optionally, wherein the start-stop system is configured in the disabled state to output a disable signal to a sub-system of the vehicle.

5. The start-stop system of any preceding claim, wherein the start-stop system is configured to only transition to the enabled state when the rotatable sleeve is held in the second sleeve position for a more than a predetermined amount of time; optionally wherein the predetermined amount of time comprises at least 0.5 seconds, optionally at least 1 second, optionally at least 1.5 seconds, optionally at least 2 seconds, optionally at least 2.5 seconds, optionally at least 3 seconds.

6. The start-stop system of any preceding claim, wherein when the start-stop system is in the enabled state and the rotatable sleeve is moved again from the first sleeve position to the second sleeve position and/or is held in the second sleeve position, the start-stop system remains in the enabled state.

7. The start-stop system of any preceding claim, wherein the rotatable sleeve and/or the body and/or the push button comprises one or more visual indicia configured to indicate which rotational direction of the rotatable sleeve causes the start-stop system to transition to the enabled state.

8. The start-stop system of any preceding claim, wherein the rotatable sleeve and/or body comprises a state indicator configured to indicate whether the start-stop system is in the enabled state or not; optionally wherein the state indicator comprises an indicator light, wherein the start-stop system is configured to illuminate the indicator light in the enabled state; optionally wherein the indicator light comprises an LED; and/or optionally, wherein the indicator light is configured to emit green light in the enabled state and/or optionally wherein the start-stop system is configured so that the indicator light operates in a first light configuration in the enabled state and in a second light configuration in the or a disabled state; optionally, wherein the indicator light emits a first colour of light (e.g., green) in the first light configuration and a second colour of light (e.g., white or red) in the second light configuration.

9. The start-stop system of any preceding claim, wherein the push button comprises a light device configured to illuminate the push button and/or to indicate whether the start-stop system is in the enabled state and/or to indicate whether the prime mover is activated; optionally, wherein the start-stop system is configured so that the light device operates in different light configurations depending on whether the start-stop system is in the enabled state or not and/or depending on whether the prime mover is activated or not; and/or optionally, wherein the start-stop system is configured to pulse the light device and or to switch the light device between different colours depending on whether the start-stop system is in the enabled state or not and/or depending on whether the prime mover is activated or not; optionally wherein the start-stop system is configured to pulse the light device in the enabled state when the prime mover is not activated, to indicate that the prime mover is ready to be activated.

10. The start-stop system of any preceding claim, wherein the rotatable sleeve comprises an outer circumferential surface having a plurality of grip formations for facilitating rotation of the rotatable sleeve around the push button; optionally, wherein the grip formations comprise radial projections and/or recesses in the outer circumferential surface; optionally, wherein each radial projection and/or recess spans at least 1% of a circumference of the outer circumferential surface, optionally at least 2%, optionally at least 3%, optionally at least 4%.

11. The start-stop system of any preceding claim, wherein, when the prime mover is already activated and the push button is moved from the first button position to the second button position, the start-stop system is configured to deactivate the prime mover of the vehicle; optionally, wherein the start-stop system is configured to output a prime mover deactivation signal to deactivate the prime mover of the vehicle; optionally wherein, when the prime mover is deactivated in response to the push button being moved from the first button position to the second button position, the start-stop system is configured to remain in the enabled state until the rotatable sleeve is actuated subsequently to movement of the push button or optionally wherein, when the prime mover is deactivated in response to the push button being moved from the first button position to the second button position, the start-stop system is configured to transition to the or a disabled state.

12. The start-stop system of any preceding claim, wherein the start-stop system comprises a controller configured to detect movement of the push button and/or rotatable sleeve and, based on detected movement of the push button and/or rotatable sleeve, to set the enabled state and/or set the disabled state and/or activate the prime mover and/or deactivate the prime mover and/or output the or an enable signal and/or disable signal and/or prime mover activation signal and/or prime mover deactivation signal and/or to power the or a state indicator or indicator light; optionally wherein the controller is configured to determine whether the start-stop system has been in the enabled state for more than a predetermined amount of time, wherein the controller is also configured to determine whether the prime mover and/or other sub-systems of the vehicle are activated or not, and wherein, when it is determined that the start-stop system has been in the enabled state for more than the predetermined amount of time and that the prime mover and/or other sub-systems of the vehicle are not activated, the controller is configured to transition the start-stop system to the or a disabled state.

13. The start-stop system of any preceding claim, wherein the body comprises a shank portion for insertion into an aperture in the vehicle and a flange portion for abutting a surface of the vehicle surrounding the aperture; optionally, wherein the shank portion has a non-circular cross-section for inhibiting rotation of the shank portion in a corresponding non-circular aperture; and/or optionally, wherein the shank portion comprises one or more longitudinal ribs for engaging a periphery of the aperture to inhibit axial movement of the shank portion out of the aperture.

14. The start-stop system of any preceding claim, wherein the start-stop system comprises an outer diameter in a range of around 20mm to 80mm, optionally in a range of around 30mm to 70mm, optionally in a range of around 40mm to 60m; and/or wherein the start-stop system comprises an axial dimension extending from a flange portion of the body to an end surface of the push button and/or rotatable sleeve, the axial dimension being in a range of around 5mm to 30mm, optionally in a range of around 10mm to 25mm, optionally in a range of around 15mm to 20mm.

15. A working vehicle comprising a prime mover and the start-stop system of any preceding claim; optionally, wherein the working vehicle is one or more of: a loader, a skid-steer loader, a dump truck, an excavator, a slew excavator, a backhoe loader, a telescopic handler, a rough-terrain or industrial forklift, a mobile elevated work platform, a compaction vehicle, a grader, a bulldozer, a tractor, a combine harvester, a self-propelled harvester, a sprayer, a timber harvester or a feller buncher; optionally wherein the prime mover comprises an internal combustion engine (e.g., a hydrogen or diesel-powered internal combustion engine) and/or wherein the prime mover comprises an electric motor and the working vehicle further comprises an energy storage device (e.g., battery) for powering the electric motor.
